# NEUE EUROPÄISCHE PATENTSCHRIFT

(11) **EP 0 977 069 B2**
(45) Veröffentlichungstag und Bekanntmachung des Hinweises auf die Entscheidung über den Einspruch: **15.03.2017**
(45) Hinweis auf die Patenterteilung: 13.09.2006
(21) Anmeldenummer: 99112488.4
(22) Anmeldetag: 01.07.1999
(51) Int. Cl.: G02B 21/00

(54) **Verfahren und Anordnung zur konfokalen Mikroskopie**
Method and apparatus for confocal microscopy
Dispositif et méthode pour la microscopie confocale

(30) Priorität: 04.07.1998 DE 19829981
(43) Veröffentlichungstag der Anmeldung: 02.02.2000
(73) Patentinhaber: Carl Zeiss Microscopy GmbH, 07745 Jena (DE); EUROPÄISCHES LABORATORIUM FÜR MOLEKULARBIOLOGIE, 69117 Heidelberg (DE)
(72) Erfinder: Tille, Sebastian Dipl.-Ing. (FH), 35043 Marburg (DE); Simon, Ulrich Dr., 07743 Jena (DE); Möhler, Gunter Dipl.-Ing., 04720 Mochau (DE); Wilhelm, Stefan Dipl.-Ing., 07743 Jena (DE); Meisel, Ulrich Dr., 07743 Jena (DE); Stelzer, Ernst Hans Karl Dr., 74909 Meckesheim (DE)
(74) Vertreter: Schiffer, Axel Martin

(56) Entgegenhaltungen:
- EP-A- 0 620 468
- EP-A- 0 782 027
- EP-A- 0 916 981
- EP-A1- 0 620 468
- EP-A1- 0 916 981
- EP-A2- 0 440 342
- DE-A1- 3 915 692
- DE-A1- 3 941 726
- DE-T2- 69 131 176
- DE-T2- 69 402 958
- HUBIN T ET AL: "AN ACOUSTO-OPTICALLY SCANNED VIDEO-RATE IDT CONFOCAL MICROSCOPE SUITABLE FOR USE WITH MULTIPLE WAVELENGTHS" SPIE THREE-DIMENSIONAL MICROSCOPY: IMAGE ACQUISITION & PRO, XX, XX, Bd. 2184, 1994, Seiten 9-20, XP000514271
- LAURA ROBINSON ET AL.: "Confocal microscopes probe biological specimens" [Online] XP002173906 Gefunden im Internet: <URL: http://152.84.50.20/Artigos/clsm.htm> [gefunden am 2001-08-03] -& LASER FOCUS WORLD, Mai 1994 (1994-05), Seiten 215-220, XP002173905
- "Technische Daten LSM 510 (Release 2.8)" [Online] 1997 XP002173907 Gefunden im Internet: <URL: http://www.zeiss.de/de/micro/home.nsf/Inha ltWWWintern/3508A826A495DBF1C12567C1004B85 B7> [gefunden am 2001-08-03] * das ganze Dokument * -& "Konfokales Laser Scanning Mikroskop LSM 510" [Online] XP002173908 Gefunden im Internet: <URL: http://www.zeiss.de/C12567BE00459794/Inhal tWWWIntern/A512A32375C9A970C12567C1004B7BA 9> [gefunden am 2001-08-03] * das ganze Dokument * -& "LSM 510 from Carl Zeiss- the Pioneer of Laser Scanning Microscopy" [Online] XP002173909 Gefunden im Internet: <URL: http://www.zeiss.de/de/micro/home_e.nsf/In haltWWWintern/2AD41645F6CF87A4C12567C1005B 4916> [gefunden am 2001-08-03] * das ganze Dokument *
- R. NITSCHKE ET AL.: 'A modified confocal laser scanning microscope allows fast ultraviolet ratio imaging of intrecellular Ca²+ activity using Fura-2' EUROP J PHYSIOL Bd. 433, 1997, Seiten 653 - 663
- K. WINKLER ET AL.: 'Leica TCS 4D UV - Das Systemkonzept für die Multiparameter-Konfokalmikroskopie' MITTEILUNG FÜR WISSENSCHAFT UND TECHNIK BD. Nr. 1, Juni 1995, Seiten 9 - 19
- P. WEDEKIND ET AL.: 'Scanning microphotolysis: a new photobleaching technique based on fast intensitymodulation of a scanned laser beam and confocal imaging' JOURNAL OF MICROSCOPY Bd. 176, Nr. 1, Oktober 1994, Seiten 23 - 33
- X.F. WANG ET AL.: 'Fluorescence Imaging Spectroscopy and Microscopy', 1996, JOHN WILEY & SONS, INC., NEW YORK - CHICHESTER - BRISBANE - TORONTO - SINGAPORE Seiten 125 - 156
- J. B. PAWLEY: 'Handbook of Biological Confocal Microscopy', Bd. 2, 1995, PLENUM PRESS, NEW YORK Seiten 22, 152 - 275-277,328, 549

## Beschreibung

Die Erfindung bezieht sich auf ein Verfahren zur konfokalen Mikroskopie, bei dem Laserlicht verschiedener Spektralbereiche in einen in mindestens zwei Koordinaten abgelenkten Mikroskopstrahlengang eingekoppelt und zeitlich nacheinander auf Orte einer Probe gerichtet wird, wobei die Probe in mindestens einer Ebene Ort für Ort und Zeile für Zeile mit dem Laserlicht beaufschlagt und aus dem von den beaufschlagten Orten reflektierten und/oder emittierten Licht ein Bild der abgetasten Ebene generiert wird. Die Erfindung bezieht sich weiterhin auf ein Laser-Scan-Mikroskop zur Durchführung dieses Verfahrens.

Während mit der konventionellen Lichtmikroskopie lediglich die optische Erfassung einer Abbildungsebene möglich ist, bietet die Konfokalmikroskopie als spezielle Weiterentwicklung der Lichtmikroskopie die Möglichkeit, Mikrostrukturen auch in der Z-Achse des Raumes abzubilden und zu vermessen. Mit dem Lichtmikroskop ist es beispielsweise nicht möglich, bei hoher Vergrößerung einen Eindruck von der räumlichen Struktur der rauhen Oberfläche einer Probe zu erhalten, da jeweils nur ein kleiner Bereich der Probe scharf dargestellt werden kann, während in der Tiefe liegende Details der Oberfläche durch den hohen Streulichtanteil und die fehlende axiale Auflösung unscharf abgebildet werden.

Beim konfokalen Laser-Scan-Mikroskop dagegen wird das Streulicht weitestgehend eliminiert und nur die Strukturen werden abgebildet, die sich in der Fokusebene des Objektivs befinden. Wird die Strahlung auf unterschiedliche Ebenen fokussiert, so können aus der Abtastung dieser in Richtung der Z-Achse gestaffelten Ebenen dreidimensionale Bilder einer Probe berechnet werden.

Dazu wird eine erste Lochblende punktförmig verkleinert in die Objektebene abgebildet, wobei als Beleuchtungsquelle Laser dienen. Der punktförmige Laserstrahl wird mit Hilfe von Ablenkspiegeln rasterförmig Ort für Ort und Zeile für Zeile über die Probe bewegt. Durch das Mikroskopobjektiv hindurch wird das von der Probe reflektierte und/oder emittierte Licht auf eine zweite Lochblende fokussiert, die konjugiert zur ersten Lochblende angeordnet ist. Die Anordnung dieser beiden Lochblenden hat zur Folge, daß nur Informationen aus der Fokusebene zu einem oder mehreren Detektoren gelangen, die der zweiten Lochblende nachgeordnet sind.

Das Streulicht, das oberhalb und unterhalb des Fokus entsteht, wird durch die zweite Lochblende eliminiert. Die mit einer zweidimensionalen Ablenkung ermittelten Informationen aus mehreren übereinanderliegenden Abbildungsebenen werden gespeichert und zu Bildern weiterverarbeitet.

Dieses Prinzip der konfokalen Laser-Scan-Mikroskopie ist beispielsweise beschrieben in Schroth: Konfokale Laser-Scaning-Mikroskopie, eine neue Untersuchungsmethode in der Materialprüfung", Zeitschrift Materialprüfung Jg. 39 (1997), Heft 6, Seiten 264 ff.

In "SCANNING MICROPHOTOLYSIS: A NEW PHOTOBLEACHING TECHNIQUE BASED ON FAST INTENSITY MODULATION OF A SCANNED LASER BEAM AND CONFOCAL IMAGING; Journal of Microskopy, Vol. 176 Pt 1, October 1994 pp. 22 - 33" und "LINE-SCANNING MICROPHOTOLYSIS FOR DIFFRACTION-LIMITED MEASUREMENTS OF LATERAL DIFFUSION; Biophysical Journal, Vol. 71 September 1996, Seiten 1621 - 1632" sind Vorrichtungen und Verfahren zur rasternden Mikrophotolyse beschrieben. Mit Hilfe eines Mikroskopaufbaus werden dort ausgewählte Probenbereiche mit einer hoch intensiven Laserstrahlung beaufschlagt.

FLUORESCENCE IMAGING SPECTROSCOPY AND MICROSCOPY; John Wiley & Sons 1996, INC., Chapter 5, Seiten 125 - 156 bezieht sich auf technische Eigenschaften sowie Einsatzmöglichkeiten von AOTF. Insbesondere ist dort die wellenlängenabhängige Modulation von Laserlinien zum Einsatz bei einem konfokalen Laser-Scanning-Mikroskop beschrieben.

WO 94/18547 und Carlsson et al. "Using intensity-modulated scanning beams in combination with lock-in detection for recording multiple-labeled fluorescent specimens in confocal laser microskopy, SPIE Vol. 2184" beziehen sich auf Vorrichtungen und Verfahren, bei denen mikroskopische Bilder mit einer Mehrzahl von Wellenlängen gleichzeitig aufgenommen werden. Dabei werden die verschiedenen Wellenlängen mit unterschiedlichen Frequenzen in ihrer Intensität moduliert und mit Hilfe des Lock-In-Technik messtechnisch getrennt.

Weiterhin ist aus den "Mitteilungen für Wissenschaft und Technik", Band II, Nr.1, Seiten 9-19, Juni 1995 bekannt, als Beleuchtungsquelle in Laser-Scan-Mikroskopen entweder einzelne Laser mit jeweils einer Wellenlänge oder auch Multi-Line"-Mischgas-Laser mit einer Vielzahl von nutzbaren Wellenlängen zu verwenden. Damit wird die Möglichkeit eröffnet, neben den klassischen Kontrastierverfahren Hellfeld, Phasenkontrast und Interferenzkontrast die Konfokalmikroskopie für die Fluoreszenztechnik zu nutzen. Dabei wird davon ausgegangen, daß unterschiedliche Fluorochrome, deren Anregungs- und Emissionswellenlängen in verschiedenen spektralen Bändern liegen, die Darstellung von Strukturen gleichzeitig in mehreren Floreszenzfärbungen erlauben. So können in Abhängigkeit von den spektralen Eigenschaften verschiedener Farbstoffmoleküle neben morphologischen Informationen auch Aussagen über physiologische Parameter gewonnen werden. Nutzt man das Konfokalmikroskop für fluorometrische Verfahren, lassen sich Aufschlüsse über Veränderungen der Konzentration von Ionen und Molekülen ableiten. Hierbei sind auch Indikatoren von Bedeutung, die zusätzlich zur Intensitätsabhängigkeit eine Verschiebung des Anregungs- oder Emissionsspektrums zeigen und insofern eine Quantifizierung von Ionenkonzentrationen ermöglichen. Weiterhin wird in diesem Zusammenhang das Photo-Bleich-Verfahren vorgeschlagen, bei dem eine definierte Inhomogenität erzeugt wird, um über die Dynamik des sich anschließend einstellenden Gleichgewichtes Objektinformationen wie Fluidität und Diffusion erhalten zu können.

Aus der vorgenannten Veröffentlichung ist es bekannt, Ar-Kr-Laser zur Fluoreszenzanregung im sichtbaren Spektralbereich mit den Linien 488nm, 568nm und 647nm einzusetzen. Diese Linien werden in einem Laserstrahl vereinigt und über Lichtleitfasern der Scan-Einrichtung zugeführt. Zur Anregung im UV-Bereich wird ein Ar-Laser der Wellenlängen 351nm und 364nm vorgeschlagen. Auch hierfür erfolgt die Einkopplung in die Scan-Einrichtung über Lichtleitfasern.

Die hier beschriebenen Verfahren und Anordnungen lassen sich zur Aufnahme von 3D-Datensätzen nutzen, die z.B. eine zuverlässige Zuordnung von räumlichen Zell- oder Gewebestrukturen innerhalb einer Mikroarchitektur oder die Lokalisation mehrerer Genorte in den Chromosomen bei FISH-Experimenten erlauben.

Allerdings besteht dabei der Nachteil, daß die jeweilige Probe über den gesamten Scan-Bereich mit der im Lasermodul erzeugten und in die Scan-Einrichtung eingekoppelten Laserstrahlung beaufschlagt wird. Damit ist der gesamte Scan-Bereich einer relativ hohen Strahlenbelastung ausgesetzt, was insbesondere bei der Untersuchung lebender Organismen zu unerwünschten Effekten und unzureichenden Ergebnissen führt.

Weiterhin besteht der Nachteil, daß bei Anregung der Probe mit unterschiedlichen Wellenlängen, etwa der vorgenannten Laserlinien, keine eindeutige Detektion und Bewertung der von einem betimmten Ort einer Probe emittierten und/oder reflektierten Strahlung möglich ist, da der Effekt des gegenseitigen Durchblutens" der einzelnen Spektrallinien auftritt.

Ausgehend davon liegt der Erfindung die Aufgabe zugrunde, ein Verfahren zur Laser-Scan-Mikroskopie der vorbeschriebenen Art derart weiterzubilden, daß sowohl eine geringere Strahlenbelastung der Probe als auch eine präzisere Bild-Auswertung erzielt werden.

Erfindungsgemäß wird diese Aufgabe durch ein Verfahren mit den Merkmalen des Anspruchs 1 sowie durch ein Laser-Scan-Mikroskop mit den Merkmalen des Anspruchs 13 gelöst.

Erfindungsgemäß ist das Verfahren der oben genannten Art dadurch weitergebildet, dass das Laserlicht während der Bildaufnahme in seiner spektralen Zusammensetzung verändert wird und in einer Scanzeile nebeneinander liegende Probenorte mit Laserlicht unterschiedlicher spektraler Zusammensetzung beaufschlagt werden, und dass durch die Beaufschlagung der

Probe mit dem Laserlicht jedem Probenort eine charakteristische spektrale Zusammensetzung des Laserlichts zugeordnet wird, so dass beim Abtasten bestimmter Orte der Probe gezielt eine Veränderung der spektralen Zusammensetzung des Laserlichts vorgenommen wird.

Das erfolgt, indem entweder die Einkopplung einzelner oder mehrerer Spektralanteile oder auch die Einstrahlung des Lichtes insgesamt zeitweise unterbrochen wird oder indem zeitweise einzelne oder mehrere Spektralanteile zusätzlich in den Mikroskopstrahlengang eingekoppelt werden, während die Ablenkung des Mikroskopstrahlenganges ununterbrochen fortgesetzt wird.

Dadurch wird erreicht, daß mindestens zwei nebeneinander liegende Orte der Probe mit Licht unterschiedlicher Spektraleigenschaften und mit Laserstrahlung unterschiedlicher Intensität beaufschlagt werden. Durch zeitweise Unterbrechung der Einkopplung des Laserlichtes während der Ablenkung des Mikroskopstrahlenganges ist es möglich, nur ausgewählte Abschnitte des Bildfeldes mit der Laserstrahlung zu beaufschlagen.

Eine Schonung der Probe wird insofern erreicht, als lediglich die für die Bildauswertung relevanten Bereiche einer Probe mit Laserstrahlung höherer Intensität beaufschlagt werden.

In einer bevorzugten Ausgestaltungsvariante des erfindungsgemäßen Verfahrens ist vorgesehen, daß die spektrale Zusammensetzung und/oder die Intensität des Laserlichtes während der Abtastung mehrerer nebeneinanderliegender Orte, die so eine Abtastzeile bilden, geändert wird. Dabei kann die Ablenkung über die Orte dieser Zeile hinweg sowohl mehrfach in gleicher Richtung oder auch bidirektional erfolgen. Erfindungsgemäß ist beispielhaft vorgesehen, bei jedem Scan über die Orte dieser Zeile hinweg, unabhängig davon, ob dieser in gleicher Richtung oder entgegengesetzt erfolgt, die Veränderung der spektralen Zusammensetzung bzw. der Intensität immer in Bezug auf dieselben nebeneinander liegenden Orte dieser Zeile vorzunehmen, wodurch die Qualität der Bildauswertung erhöht wird, während der Energieeintrag in die Probe begrenzt bleibt. Hierdurch erreicht man zugleich, daß einzelne aneinandergrenzende Orte der Probe ohne den Effekt des gegenseitigen "Durchblutens" einzelner Spektralbereiche betrachtet werden können.

Die unterschiedliche spektrale Zusammensetzung der in den Mikroskopstrahlengang eingekoppelten Laserstrahlung erreicht man beispielsweise, indem die von mehreren Linienlasern etwa mit den Wellenlängen 633nm, 568nm, 543nm, 514nm, 488nm und 458nm bereitgestellte Strahlung nach Bedarf bzw. in Abhängigkeit von den Eigenschaften der auszuwertenden Probe mit einer einzelnen Wellenlänge, mit einer Auswahl mehrerer Einzelwellenlängen oder mit allen verfügbaren Einzelwellenlängen eingekoppelt wird. Neben dieser Strahlung im VIS-Bereich können weiter Wellenlängen im UV-Bereich, etwa 351nm und 364nm, zur Einkopplung bereitgestellt werden.

Erfindungsgemäß erfolgt die Einkopplung der Laserstrahlung in den Mikroskopstrahlengang polarisationserhaltend über Single-Mode-Fasern. Die Einstellung der jeweils zur Einstrahlung vorgesehenen Laserlinien auf eine gewünschte Helligkeit wird vorteilhafterweise mit einem akusto-optisch durchstimmbaren Filter (AOTF) vorgenommen, dem auch noch ein akusto-optischer Modulator (AOM) nachgeordnet sein kann. Die Anpassung der jeweiligen Laserwellenlänge an das jeweils in den Strahlengang gestellte Mikroskopobjektiv erfolgt sowohl für den UV- als auch für den VIS-Bereich durch variable Strahlkollimation.

Eine weitere bevorzugte Ausgestaltung des erfindungsgemäßen Verfahrens besteht darin, daß das von jedem einzelnen beaufschlagten Ort der Probe reflektierte und/oder emittierte Licht im Hinblick auf seine spektralen Eigenschaften und seine Intensität bewertet wird, wobei die Bewertung synchron zur Beaufschlagung desselben Ortes und unter Berücksichtigung der spektralen Zusammensetzung und/oder der Intensität des Laserlichtes erfolgt, mit dem dieser Ort beaufschlagt wurde. Damit bietet sich die Möglichkeit, den abgetasteten Abschnitt der Probe bezogen auf die einzelnen Orte auszuwerten, was zu einer sehr hohen Auflösung und zu einer höchstmöglichen Genauigkeit bei der Bildauswertung führt.

Im Rahmen der Erfindung liegt es ebenfalls, daß das von jedem einzelnen beaufschlagten Ort reflektierte und/oder emittierte Laserlicht mit mehreren Detektionskanälen detektiert wird, wobei die einzelnen Detektionskanäle zum Empfang unterschiedlicher Spektralanteile ausgelegt sind. Damit sind sehr gute Bedingungen für die Untersuchung von Multifluoreszenzpräparaten gegeben, und es können über jeden Detektionskanal identische optische Schnitte bei er simultanen Aufnahme von Mehrfachfluoreszenzpräparaten erzeugt werden.

In diesem Zusammenhang ist erfindungsgemäß vorgesehen, daß die spektrale Zusammensetzung und/oder die Intensität des in den Mikroskopstrahlengang eingekoppelten Laserlichtes der Anregungsstrahlung eines in der Probe enthaltenen oder auf die Probe aufgebrachten Fluoreszenzfarbstoffes entspricht und die einzelnen Detektionskanäle für den Empfang der vom Fluoreszenzfarbstoff ausgehenden Emissionsstrahlung ausgelegt sind. Damit ist es möglich, Laserlicht zur Anregung unterschiedlicher Fluoreszenzfarbstoff zu erzeugen und aus der Detektion Rückschlüsse auf die Verteilung dieser Fluoreszenzfarbstoffe auf bzw. in der Probe zu ziehen.

Eine weitere sehr bevorzugte Ausgestaltung der Erfindung besteht darin, daß permanent eine Bewertung der spektralen Zusammensetzung und/oder der Intensität des eingekoppelten Laserlichtes vorgenommen wird und eine mathematische Verknüpfung der Bewertungsergebnisse der auf einen bestimmten Ort gerichteten Laserstrahlung mit den Bewertungsergebnissen des von diesem Ort reflektierten und/oder emittierten Lichtes erfolgt. Im Ergebnis dieser Verknüpfung kann beispielsweise die Ablenkposition des Mikroskopstrahlenganges für zwei nebeneinanderliegende Orte ermittelt nach den Koordinaten x,y,z bestimmt werden, für die bei der Auswertung über einen vorgegebenen Schwellwert hinausgehende Unterschiede der spektralen Eigenschaften des Lichtes nachweisbar sind, das von diesen Orten reflektiert und/oder emittiert wird, woraus auf das Vorhandensein einer optischen Grenzschicht zwischen diesen beiden Orten zu schließen ist. Diese Ablenkpositionen werden erfindungsgemäß gespeichert und der Berechnung von Flächen und/oder Volumina zugrunde gelegt, die von optischen Grenzschichten innerhalb der Probe umschlossen sind.

Mit den so gewonnenen und gespeicherten Ablenkpositionen ist es außerdem möglich, Stellsignale für die spektrale Zusammensetzung und/oder der Intensität des Laserlichtes für die Beaufschlagung dieser Orte bei einem nachfolgenden Abtastzyklus zu ermitteln und vorzugeben, womit eine selbsttätige Optimierung bei der Bildauswertung unter Berücksichtigung der optischen Eigenschaften der Probe bzw. des Fluoreszenzfarbstoffes erzielt wird.

Insbesondere ist das erfindungsgemäße Verfahren vorteilhaft für das sogenannte Photobleichen nutzbar. Dabei wird während der Abtastung ein ausgewähltes Areal einer Probe zunächst mit einer verhältnismäßig hohen Strahlungsintensität beaufschlagt und dadurch ein Bleichvorgang ausgelöst. Mit den unmittelbar nachfolgenden Abtastzyklen werden die einsetzenden Reaktionen optisch erfaßt und ausgewertet, woraus Informationen über die sofort nach dem Bleichvorgang in der Probensubstanz ablaufenden dynamischen Prozesse, wie Diffusion und Transportprozesse, gewonnen werden können.

Hierzu muß die Abtastung mit sehr hoher Zeitauflösung erfolgen, was erfindungsgemäß mit der hinreichend schnellen, synchron zur Strahlablenkung erfolgenden Umschaltung zwischen unterschiedlichen Intensitäten und unterschiedlichen spektralen Zusammensetzungen des auf einzelne Orte der Probe treffenden Lichtes erreicht wird.

Die schnelle Umschaltung zwischen unterschiedlichen Intensitäten und unterschiedlichen spektralen Zusammensetzungen der Laserstrahlung wird mit einem akusto-optisch durchstimmbaren Filter (AOTF) vorgenommen, der sinngemäß, jedoch wesentlich schneller, die Funktion verschiedener im Strahlengang gegeneinander austauschbarer Filter übernimmt und darüberhinaus auch noch einzelne Laser-Linien bzw. beliebige Kombinationen von Linien mit hoher zeitlicher Dynamik in der Intensität modulieren kann.

Funktionsweise und Anwendung des AOTF sind beispielsweise ausführlich beschrieben in: String, Kenneth, R.: "Wavelength Selection for Illuminaton in Fluorescence Microscopy", NIH, LKEM, Building 10/6N309, Bethexda, MD 20892, April 1993. Weiterhin sind konkrete Anwendungsbeispiele für AOTF in den US-Patenten US 5,444,528, US 5,377,003 und US 5,216,484 dargelegt.

Die Zeitsynchronität zwischen der Ansteuerung des AOTF zur Modulation der Laserstrahlung und der Ansteuerung der Scan-Einrichtung zur Strahlablenkung wird dadurch erzielt, daß den von der Ansteuereinrichtung an die Scan-Einrichtung ausgegebenen Steuersignalen jeweils bestimmte Steuersignale für den AOTF zugeordnet werden. So erfolgen die Ansteuerung der San-Einrichtung und die Ansteuerung des AOTF stets synchron, d.h. der Ausgabe eines Steuerimpules für die Scan-Einrichtung sind zeitlich stets auch Steuerimpulse für den AOTF angefügt.

Das bedeutet andererseits, daß jeder Ablenkposition und damit jedem Ort der Probe eine charakteristische Intensität und/oder spektrale Zusammensetzung des Lichtes zugeordnet werden kann.

Dazu sind die Schaltungsanordnungen zur Ausübung des Verfahrens im Hinblick auf sehr kurze Laufzeiten der Steuerimpulse von der Ausgabe bis zur Umschaltung der Strahlmodulation durch den AOTF optimiert. Diese liegen im Bereich von < 10 ms. Eine Verfahrensvariante besteht darin, bei der Ansteuerung des AOTF bzw. der Scan-Einrichtung Vorhalte- bzw. Vorlaufzeiten für die Umschaltung der Intensität und Spektralzusammensetzung und/oder für die Ablenkung vorauszuberechnen, damit genau der vorgesehene Ort auch mit der vorgesehenen Strahlungsintensität und spektralen Zusammensetzung beaufschlagt wird.

Die Erfindung bezieht sich weiterhin auf ein Laser-Scan-Mikroskop zur Durchführung der vorgenannten Verfahrensschritte, mit einem Lasermodul zur Erzeugung von Laserlicht mit verschiedenen auswählbaren Spektralanteilen, mit Single-Mode-Fasern zur Einkopplung des Laserlichtes in den Mikroskopstrahlengang, mit einer mindestens zweidimensional ablenkenden Scan-Einrichtung, mit einem Mikroskopobjektiv, welches das Laserlicht auf eine Probe fokussiert, mit mehreren Detektoren für den Empfang verschiedener Spektralanteile des von der Probe reflektierten und/oder emittierten Lichtes und mit einer Auswerteschaltung, die den Ausgängen der Detektoren nachgeschaltet ist.

Erfindungsgemäß sind in einem solchen Laser-Scan-Mikroskop im Lasermodul mehrere einzeln ansteuerbare Einzel- und/oder Multiwellenlängenlaser vorgesehen, dem Lasermodul ist ein Strahlvereiniger, ein akusto-optisch durchstimmbarer Filter (AOTF) und/oder ein akusto-optischer Modulator (AOM) nachgeschaltet, den Single-Model-Fasern sind Kollimationsoptiken nachgeordnet, deren Abstände zum jeweiligen Faserende veränderbar sind und die mit ansteuerbaren Stelleinrichtungen gekoppelt sind. Als Detektoren sind Photomultiplier (PMT) vorgesehen, von denen jeweils einer einem Reflexions- oder Emissionsband und somit einem Detektionskanal zugeordnet ist. Zur Aufzweigung der von der Probe ausgehenden Strahlung in die einzelnen Detektionskanäle sind auf Teilerrädern angeordnete und durch Drehung der Teilerräder gegeneinander austauschbare Filter und/oder Farbteiler vorhanden, wobei jedes Teilerrad ebenfalls mit einer ansteuerbaren Stelleinrichtung gekoppelt ist. Des weiteren sind die Steuereingänge des Lasermoduls, des AOTF, des AOM, der Scan-Einrichtung sowie der Stelleinrichtungen für die Teilerräder und die Kollimationsoptiken mit den Ausgängen der Auswerteschaltung verbunden.

Erfindungsgemäß ist der auf die Probe gerichtete Mikroskopstrahlengang aufgezweigt und einer der Zweige auf einen optoelektronischen Empfänger gerichtet, dessen Ausgang ebenfalls mit der Ansteuereinheit verbunden ist.

Erfindungsgemäß erfolgt in der Auswerteschaltung eine mathematische Verknüpfung der Ausgangssignale des optoelektronischen Empfängers mit den Ausgangssignalen der PMT und mit den Ablenksignalen für die Scan-Einrichtung können. Am Ausgang der Auswerteschaltung optimierte Stellsignale für das Lasermodul, das AOTF, dem AOM, die Scan-Einrichtung und für die Stelleinrichtung zur Verfügung gestellt werden.

Die Erfindung soll nachfolgend anhand eines Ausführungsbeispieles näher erläutert werden. In den dazugehörigen Zeichnungen zeigen
- Fig.1: den prinzipiellen Aufbau eines Laser-Scan-Mikroskops
- Fig.2: das Prinzip der Ablenkung des Laserlichtes über die einzelnen Orte einer Probe

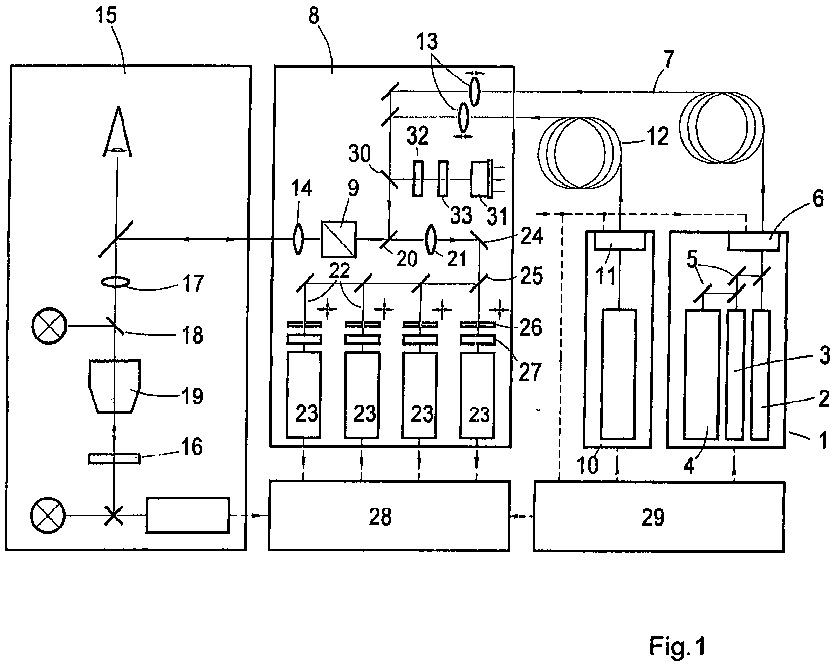

In Fig.1 ist ein Lasermodul 1 dargestellt, das mit den Lasern 2,3 und 4 zur Erzeugung von Laserlicht im sichtbaren Bereich mit den Wellenlängen 633nm, 543nm und 458nm ausgestattet ist. Die von diesen Lasern ausgehende Strahlung wird über mehrere Strahlvereiniger 5, ein AOTF 6 und eine Faser 7 in eine Scan-Einrichtung 8 eingekoppelt, die mit einer in den Koordinaten x und y strahlablenkenden Einheit 9 ausgestattet ist. ,

In einem zweiten Lasermodul 10 ist ein UV-Laser vorgesehen, dessen Licht über ein AOTF 11 und eine Lichtleitfaser 12 in die Scan-Einrichtung 8 eingekoppelt wird.

In beiden Strahlengängen sind den Lichtleitfasern 7 und 12 Kollimationsoptiken 13 nachgeordnet, deren Abstände zum jeweiligen Faserende veränderbar sind und die zu diesem Zweck mit einer ansteuerbaren Stelleinrichtung (zeichnerisch nicht dargestellt) gekoppelt sind.

Von der strahlablenkenden Einrichtung 9 wird die Laserstrahlung durch ein Scan-Objektiv 14 in den Strahlengang des vereinfacht dargestellten Mikroskops 15 eingekoppelt und hier auf eine Probe 16 gerichtet. Dabei passiert die Laserstrahlung eine Tubuslinse 17, einen Strahlteiler 18 und das Mikroskopobjektiv 19.

Das von dem jeweils beaufschlagten Ort der Probe reflektierte und/oder emittierte Licht gelangt durch das Mikroskopobjektiv 19 zurück zur strahlablenkenden Einrichtung 9, passiert danach einen Strahlteiler 20 und wird mit Hilfe der Abbildungsoptik 21 nach Aufzweigung in mehrere Detektionskanäle 22 auf Photomultiplier 23 gerichtet, von denen jeweils einer einem der Detektionskanäle 22 zugeordnet ist. Zum Zweck der Aufzweigung in die einzelnen Detektionskanäle 22 wird das Licht von einem Umlenkprisma 24 auf dichroitische Strahlteiler 25 gerichtet. In jedem Detektionskanal 22 sind sowohl in Richtung als auch senkrecht zur Strahlungsrichtung verstellbare und in ihren Durchmessern veränderbare Pinholes 26 sowie Emissionsfilter 27 vorgesehen.

Die Ausgänge der Photomultiplier 23 führen zu den Signaleingängen einer Auswerteschaltung 28, die ihrerseits mit einer Ansteuereinrichtung 29 verbunden ist. Die Ausgänge der Ansteuereinrichtung 29 sind mit den Signaleingängen der Lasermodule 1 und 10 sowie mit Signaleingängen der Stelleinrichtungen zur Beeinflussung der Position von optischen Elementen bzw. Baugruppen, wie beispielsweise der Position der Kollimationsoptiken 13, der Pinholes 26 u. ä. verbunden (im Detail nicht dargestellt).

Beispielhaft ist die in die Scan-Einrichtung 8 eingekoppelte Laserstrahlung durch einen Strahlteiler 30 verzweigt, wobei einer der Zweige auf einen optoelektronischen Empfänger 31 gerichtet ist, dem mehrere auf Filterrädern angeordnete und durch Drehung der Filterräder gegeneinander austauschbare Linienfilter 32 und ebenso gegeneinander austauschbare Neutralfilter 33 vorgeordnet sind. Der Ausgang des Empfängers 31 liegt ebenfalls an einem Signaleingang der Auswerteschaltung 28. Die Filterräder, auf denen die Linienfilter 32 und die Neutralfilter 33 angeordnet sind, sind mit Stelleinrichtungen gekoppelt, deren Steuereingänge mit Signalausgängen der Ansteuereinrichtung 29 verbunden sind (zeichnerisch nicht dargestellt).

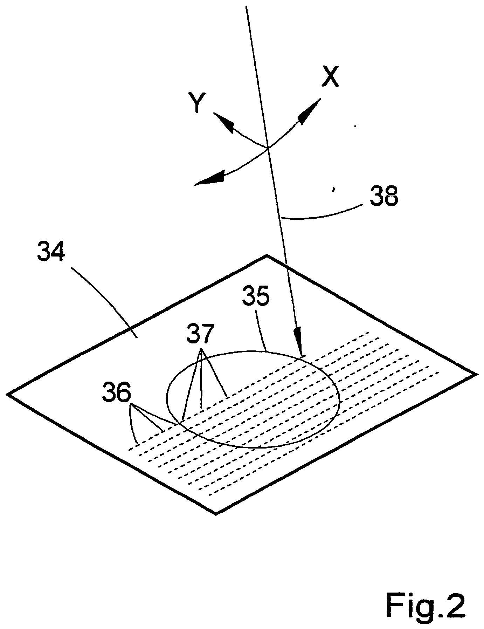

Beim Betreiben des Laser-Scan-Mikroskops wird die optische Achse 38 des Mikroskopstrahlenganges durch die Scan-Einrichtung 8, wie in Fig.2 symbolisch dargestellt, in Richtung der Koordinate X von Ort zu Ort und in Richtung der Koordinate Y von Zeile zu Zeile rasterförmig über eine zu scannende Objektebene 34 geführt, in der das auszuwertende Detail 35 einer Probe liegt.

Nach dem Stand der Technik wurde bisher Laserlicht mit während des Scannens gleichbleibender spektraler Zusammensetzung bzw. Intensität in den Mikroskopstrahlengang eingekoppelt, was dazu geführt hat, daß insbesondere bei hochauflösenden Strukturuntersuchungen an extrem kontrastarmen Objekten, beispielsweise einzelnen Zellen, Organellen, Organismen oder Parasiten, durchgängig eine hohe Strahlenbelastung erforderlich war, um Bilder mit ausreichendem Hellfeld- oder Phasenkontrast zu erhalten.

Um nun die Strahlenbelastung reduzieren und die Qualität der Bildauswertung trotzdem erhöhen zu können, ist erfindungsgemäß vorgesehen, daß während der Abtastung einer Zeile und/oder der Objektebene 34 die Einkopplung einzelner oder mehrerer Spektralanteile, gegebenenfalls auch des gesamten Spektrums, zeitweise unterbrochen wird oder, alternativ hierzu, einzelne bzw. mehrere Spektralanteile zeitweise zusätzlich eingekoppelt werden.

Während der Änderung der spektralen Zusammensetzung bzw. der Intensität des Laserlichtes bleibt die strahlablenkende Einrichtung 9 ununterbrochen in Tätigkeit. Auf diese Weise wird erreicht, daß beispielsweise die Orte 36 und 37 innerhalb einer Abtastzeile bzw. innerhalb der abzutastenden Probe unterschiedlich beaufschlagt werden. Damit ist es möglich, die Orte 37, die sich innerhalb des auszuwertenden Details 35, beispielsweise einer Zelle, befinden, einer geringeren Strahlung auszusetzen.

Umgekehrt wird bei der Abtastung der Orte 37 eine Erhöhung der Intensität und/oder eine Veränderung des Spektrums der Laserstrahlung vorgenommen, sofern das wünschenswert ist, wie beispielsweise bei der Anwendung des erfindungsgemäßen Verfahrens zum Zweck des Photobleichens, wobei es darauf ankommt, ausgewählte Areale der Probe mit einer sehr hohen Strahlungsintensität zu beleuchten, um unmittelbar danach die dann einsetzenden dynamischen Prozesse verfolgen zu können.

Mit dem erfindungsgemäßen Verfahren und mit der erfindungsgemäßen Anordnung ist es weiterhin möglich, das von jedem einzelnen der beaufschlagten Orte 36 und 37 reflektierte und/oder emittierte Licht in den einzelnen Detektionskanälen 22 zu empfangen, wobei die einzelnen Detektionskanäle 22 jeweils zum Empfang unterschiedlicher Spektralanteile des vom jeweiligen Ort ausgehenden Lichtes modifiziert sind.

Eine Besonderheit des erfindungsgemäßen Verfahrens besteht darin, daß die Detektion und die Auswertung des von jedem beaufschlagten Ort ausgehenden Lichtes synchron zur Beaufschlagung des betreffenden Ortes erfolgt. Insofern kann für jeden einzelnen der Orte 36 und 37 der Probe die Anregungswellenlänge und die Emissionswellenlänge bewertet werden, woraus Schlußfolgerungen auf die Eigenschaften der Probe genau an dem betrachteten Ort herleitbar sind.

Mit der erfindungsgemäßen Anordnung ist es weiterhin möglich, anhand der von dem optoelektronischen Empfänger 31 abgegebenen Signale permanent die Zusammensetzung und die Intensität des Laserlichtes zu kontrollieren, das auf die Probe gerichtet ist und diese Signale zum Ausgleich selbst kleinster Intensitätsschwankungen über die Ansteuereinrichtung 29 zu nutzen.

Mit einer in die Auswerteschaltung 28 integrierten Rechenschaltung wird jeweils die Anregungsstrahlung und Emissionsstrahlung bewertet, die auf ein und denselben Ort bezogen ist. Auf diese Weise ist exakt feststellbar, ob bei der Ablenkung der Laserstrahlung von einem Ort zum anderen, beispielsweise von unmittelbar benachbarten Orten 36 und 37, eine Änderung der Emissionswellenlänge oder der Intensität der emittierten Strahlung zu verzeichnen ist, die in ihrem Ausmaß über einen vorgegebenen Schwellwert hinausgeht. Sofern das der Fall ist, kann auf das Vorhandensein einer optischen Grenzschicht bei den benachbarten Orten 36 und 37 geschlossen werden.

Da für diese Orte 36,37 wie für jeden anderen abgetasteten Ort der Probe auch die Daten der Ablenkpositionen in der Ansteuereinrichtung 29 und/oder der Auswerteschaltung 28 verfügbar sind, läßt sich mit dem erfindungsgemäßen Verfahren anhand relevanter Ablenkpositionen der Verlauf derartiger optischer Grenzschichten ermitteln und unter Zugrundelegung dieser Ablenkpositionen schließlich die Fläche bzw. das Volumen berechnen, das von den optischen Grenzschichten eingeschlossen ist.

Es sei der Vollständigkeit halber darauf hingewiesen, daß die in Fig.2 dargestellte Objektebene 34 sich lediglich auf eine Abtastebene der Probe bezieht. Selbstverständlich ist es möglich, mehrere Ebenen der Probe abzutasten, indem die Laserstrahlung auf unterschiedliche Koordinaten in z-Richtung, d.h. senkrecht zur dargestellten Fläche, fokussiert wird.

## Patentansprüche

1. Verfahren zur konfokalen Laserscan-Mikroskopie, bei dem
- Laserlicht verschiedener Spektralbereiche in einen Mikroskopstrahlengang eingekoppelt und
- bei dem eine zu untersuchende Probe in mindestens zwei Koordinatenrichtungen mit einer Scan-Einrichtung zeilenweise gescannt und das Probenlicht spektral detektiert wird, wobei aus dem von den beaufschlagten Orten reflektierten und/oder emittierten Licht wenigstens ein Bild der Probe erzeugt wird,
**dadurch gekennzeichnet,**
- **dass** das Laserlicht während der Bildaufnahme in seiner spektralen Zusammensetzung verändert wird und in einer Scanzeile nebeneinander liegende Probenorte mit Laserlicht unterschiedlicher spektraler Zusammensetzung beaufschlagt werden,
- **dass** durch die Beaufschlagung der Probe mit dem Laserlicht jedem Probenort eine charakteristische spektrale Zusammensetzung des Laserlichts zugeordnet wird, so dass
- beim Abtasten bestimmter Orte der Probe (37) gezielt eine Veränderung der spektralen Zusammensetzung des Laserlichts vorgenommen wird,
- **dass** das Laserlicht während der Bildaufnahme auch in seiner Intensität verändert wird und in einer Scanzeile nebeneinander liegende Probenorte mit Laserlicht unterschiedlicher Intensität beaufschlagt werden und
- **dass** durch die Beaufschlagung der Probe mit dem Laserlicht jedem Probenort eine ortsspezifische intensität zugeordnet wird,
- wobei Orte (37) der Probe, die sich innerhalb eines auszuwertenden Details (35) der Probe befinden, im Vergleich zu Orten (36), die sich außerhalb des auszuwertenden Details (35) der Probe befinden, mit einer unterschiedlichen spektralen Zusammensetzung des Laserlichts beaufschlagt werden.

2. Verfahren nach Anspruch 1,
**dadurch gekennzeichnet,**
**dass** die spektrale Zusammensetzung und/oder die Intensität des Laserlichtes während der Ablenkung durch zeitweise zusätzliche Einkopplung einzelner oder mehrerer Spektralanteile oder durch zeitweises Unterbrechen der Einkopplung einzelner oder mehrerer Spektralanteile verändert wird.

3. Verfahren nach Anspruch 1 oder 2,
**dadurch gekennzeichnet,**
**dass** die Einkopplung des Laserlichtes während der Ablenkung zeitweise unterbrochen wird.

4. Verfahren nach Anspruch 2,
**dadurch gekennzeichnet,**
**dass** die in einer Zeile nebeneinanderliegenden Orte mehrfach mit dem eingekoppelten Laserlicht beaufschlagt und dabei stets dieselben Orte Laserlicht mit unterschiedlicher spektraler Zusammensetzung und/oder mit unterschiedlicher Intensität ausgesetzt werden.

5. Verfahren nach einem der vorgenannten Ansprüche,
**dadurch gekennzeichnet,**
**dass** Spektralanteile mit den Wellenlängen λ_{A1}=633nm, λ_{A2}=568nm, λ_{A3}=543nm, λ_{A4}=514nm, λ_{A5}=488nm und/oder λ_{A6}=458nm im VIS-Bereich sowie mit den Wellenlängen λ_{A7}=351nm und/oder λ_{A8}=364nm im UV-Bereich zeitweise zusätzlich eingekoppelt werden oder deren Einkopplung zeitweise unterbrochen wird.

6. Verfahren nach einem der vorgenannten Ansprüche,
**dadurch gekennzeichnet,**
**dass** das von jedem einzelnen beaufschlagten Ort der Probe reflektierte und/oder emittierte Licht im Hinblick auf seine spektralen Eigenschaften und seine Intensität bewertet wird, wobei die Bewertung zeitlich synchron zur Beaufschlagung desselben Ortes und unter Berücksichtigung der spektralen Zusammensetzung und/oder der Intensität des Laserlichtes erfolgt, mit dem dieser Ort beaufschlagt wurde.

7. Verfahren nach Anspruch 6,
**dadurch gekennzeichnet,**
**dass** das von jedem einzelnen beaufschlagten Ort reflektierte und/oder emittierte Laserlicht mit mehreren Detektionskanälen detektiert wird, wobei die einzelnen Detektionskanäle zum Empfang unterschiedlicher Spektralanteile ausgelegt sind.

8. Verfahren nach einem der vorgenannten Ansprüche,
**dadurch gekennzeichnet,**
**dass** die spektrale Zusammensetzung und/oder die Intensität des in den Mikroskopstrahlengang eingekoppelten Laserlichtes der Anregungsstrahlung eines in der Probe enthaltenen oder auf die Probe aufgebrachten Fluoreszenzfarbstoffes entspricht und die einzelnen Detektionskanäle zum Empfang der vom Fluoreszenzfarbstoff ausgehenden Emissionsstrahlung ausgelegt sind.

9. Verfahren nach einem der vorgenannten Ansprüche,
**dadurch gekennzeichnet,**
**dass** eine mathematische Verknüpfung von Daten, die die spektrale Zusammensetzung und/oder die Intensität des auf einen Ort gerichteten Laserlichtes charakterisieren, von Daten der Bewertungsergebnisse des von demselben Ort reflektierten und/oder emittierten Lichtes und der diesem Ort entsprechenden Ablenkpositionen zum Zweck der Bestimmung der von ausgewählten Orten einge grenzten Flächen und/oder Volumina und/oder zur Ermittlung von Stellsignalen für die Änderung der spektralen Zusammensetzung und/oder der Intensität des auf diesen Ort zu richtenden Laserlichtes vorgenommen wird.

10. Verfahren nach einem der vorgenannten Ansprüche,
**dadurch gekennzeichnet,**
**dass** eine Bewertung der spektralen Zusammensetzung und/oder der Intensität des eingekoppelten Laserlichts vorgenommen wird und eine mathematische Verknüpfung der Bewertungsergebnisse der auf einen bestimmten Ort gerichteten Laserstrahlung mit den Bewertungsergebnissen des von diesem Ort reflektierten und/oder emittierten Lichts erfolgt.

11. Verfahren nach Anspruch 10,
**dadurch gekennzeichnet,**
**dass** zur Bestimmung der Position einer optischen Grenzschicht Ablenkpositionen des Mikroskopstrahlenganges für nebeneinander liegende Orte bestimmt und abgespeichert werden, für die die Unterschiede der spektralen Eigenschaften des von diesen Orten reflektierten und/oder emittierten Lichts über einen vorgegebenen Schwellwert hinausgehen.

12. Verfahren nach Anspruch 11,
**dadurch gekennzeichnet,**
**dass** mit den gespeicherten Ablenkpositionen Stellsignale für die spektrale Zusammensetzung und/oder die Intensität des Laserlichts für die Beaufschlagung dieser Orte bei einem nachfolgenden Abtastzyklus ermittelt und vorgegeben werden.

13. Laser-Scan-Mikroskop zur Durchführung des Verfahrens nach einem der vorgenannten Ansprüche, mit
- einem Lasermodul zur Erzeugung von Laserlicht mit verschiedenen auswählbaren Spektralanteilen,
- mit Single-Mode-Fasern zur Einkopplung des Laserlichtes in den Mikroskopstrahlengang,
- mit einer mindestens zweidimensional ablenkenden Scan-Einrichtung,
- mit einem Mikroskopobjektiv, welches das Laserlicht auf eine Probe fokussiert,
- mit mehreren Detektoren für den Empfang verschiedener Spektralanteile des von der Probe reflektierten und/oder emittierten Lichtes und
- mit einer Auswerteschaltung, die den Ausgängen der Detektoren nachgeschaltet ist,
**dadurch gekennzeichnet,**
- **dass** im Lasermodul mehrere einzeln ansteuerbare Einzel- und/oder und/oder Multiwellenlängenlaser und ein AOTF vorgesehen sind, wobei die Scan-Einrichtung und der AOTF synchron ansteuerbar sind,
- **dass** als Detektoren Photomultiplier (PMT) und zur Aufzweigung der von der Probe ausgehenden Reflexions- und/oder Emissionsstrahlung in einzelne Detektionskanäle auf ansteuerbaren Wechseleinrichtungen angeordnete und gegeneinander austauschbare Farbteiler vorgesehen sind,
- **dass** die Steuereingänge des Lasermodules, der Scan-Einrichtung sowie der Wechseleinrichtungen mit den Ausgängen der Auswerteschaltung verbunden sind,
- **dass** ein Strahlungsanteil des in den Mikroskopstrahlengang eingekoppelten Laserlichtes auf einen optoelektronischen Empfänger gerichtet ist, dessen Ausgang mit der Auswerteschaltung in Verbindung steht und
- **dass** in der Auswerteschaltung eine mathematische Verknüpfung der Ausgangssignale des optoelektronischen Empfängers mit den Ausgangssignalen der PMT und mit den Ablenksignalen für die Scan-Einrichtung vorgesehen ist.

## Claims

1. Method for confocal laser scanning microscopy, in which
- laser light of different spectral ranges is coupled into a microscope beam path and
- in which a specimen to be examined is scanned line-by-line in at least two co-ordinate directions by a scanning device and the specimen light is detected spectrally, with at least one image of the specimen being generated from the light reflected and/or emitted by the locations acted upon,
**characterized in that**
- during the generation of the image the laser light is changed in its spectral composition and specimen locations lying adjacent to each other in a scanning line are acted upon by laser light of a different spectral composition,
- as a result of the laser light acting upon the specimen a characteristic spectral composition of the laser light is assigned to each specimen location so that
- during the scanning of particular locations of the specimen (37) a selective change of the spectral composition of the laser light is carried out,
- during the generation of the image the laser light is also changed in its intensity and specimen locations lying adjacent to each other in a scanning line are acted upon by laser light of a different intensity and
- as a result of the laser light acting upon the specimen a location-specific intensity is assigned to each specimen location,
- wherein locations (37) of the specimen which are within a detail (35) of the specimen to be evaluated are subjected to a different spectral composition of the laser light as compared to locations (36) which are located outside of the detail (35) of the specimen to be evaluated.

2. Method according to claim 1,
**characterized in that**
the spectral composition and/or the intensity of the laser light is changed during the deflection through a temporary additional coupling-in of individual or several spectral components or through a temporary interruption of the coupling-in of individual or several spectral components.

3. Method according to claim 1 or 2,
**characterized in that**
the coupling-in of the laser light is interrupted temporarily during the deflection.

4. Method according to claim 2,
**characterized in that**
the locations lying adjacent to each other in a line are acted upon repeatedly by the coupled-in laser light and, in doing so, always the same locations are exposed to laser light having a different spectral composition and/or a different intensity.

5. Method according to any one of the preceding claims,
**characterized in that**
spectral components having wavelengths of λA1=633nm, λA2=568nm, AA3=543nm, AA4=514nm, λA5=488nm and/or λA6=458nm in the VIS-range and having wavelengths of λA7=351nm and/or λA8=364nm in the UV-range are additionally coupled in temporarily or their coupling-in is interrupted temporarily.

6. Method according to any one of the preceding claims,
**characterized in that**
the light reflected and/or emitted by every single specimen location acted upon is evaluated with respect to its spectral characteristics and its intensity, with the evaluation being effected synchronously in time with acting on the same location and whilst taking into consideration the spectral composition and/or the intensity of the laser light by which this location was acted upon.

7. Method according to claim 6,
**characterized in that**
the laser light reflected and/or emitted by every single location acted upon is detected by means of several detection channels, the individual detection channels being designed to receive different spectral components.

8. Method according to any one of the preceding claims,
**characterized in that**
the spectral composition and/or the intensity of the laser light coupled into the microscope beam path corresponds to the excitation radiation of a fluorescence dye contained in the specimen or applied to the specimen and the individual detection channels are designed to receive the emission radiation proceeding from the fluorescent dye.

9. Method according to any one of the preceding claims,
**characterized in that**
a mathematical linking of data which characterize the spectral composition and/or the intensity of the laser light directed onto a location, of data of the evaluation results of the light reflected and/or emitted by the same location and of the deflection positions corresponding to this location is carried out for the purpose of determining surface areas and/or volumes delimited by selected locations and/or for determining adjustment signals for the change of the spectral composition and/or the intensity of the laser light to be directed onto this location.

10. Method according to any one of the preceding claims,
**characterized in that**
an evaluation of the spectral composition and/or the intensity of the coupled-in laser light is carried out and a mathematical linking of the evaluation results of the laser radiation directed onto a particular location with the evaluation results of the light reflected and/or emitted by this location is effected.

11. Method according to claim 10,
**characterized in that**
in order to determine the position of an optical boundary layer deflection positions of the microscope beam path are determined and stored for locations lying adjacent to each other, for which the differences of the spectral characteristics of the light reflected and/or emitted by these locations exceed a predetermined threshold value.

12. Method according to claim 11,
**characterized in that**
with the stored deflection positions adjustment signals for the spectral composition and/or the intensity of the laser light are determined and preset for acting upon these locations in a subsequent scan cycle.

13. Laser scanning microscope for carrying out the method according to any one of the preceding claims, comprising
- a laser module for generating laser light with different selectable spectral components,
- single-mode fibres for coupling the laser light into the microscope beam path,
- a scanning device that deflects at least two-dimensionally,
- a microscope objective which focuses the laser light onto a specimen,
- several detectors for receiving different spectral components of the light reflected and/or emitted by the specimen and
- an evaluation circuit which is connected downstream to the outputs of the detectors,
**characterized in that**
- in the laser module several individually controllable single-wavelength and/or multiple-wavelength lasers and an AOTF are provided, with the scanning device and the AOTF being controllable in a synchronous manner,
- as detectors photomultipliers (PMT) are provided and for the branching of the reflection radiation and/or emission radiation proceeding from the specimen into individual detection channels colour splitters are provided, which are arranged on controllable exchanging devices and can be substituted for each other,
- that the control inputs of the laser module, the scanning device and the exchanging devices are connected to the outputs of the evaluation circuit,
- that a radiation component of the laser light coupled into the microscope beam path is directed to an optoelectronic receiver, the output of which is connected with the evaluation circuit, and
- that in the evaluation circuit a mathematical linking of the output signals of the optoelectronic receiver with the output signals of the PMT and with the deflection signals for the scanning device is provided.

## Revendications

1. Procédé de microscopie confocale par balayage laser, dans lequel
- de la lumière laser de différents domaines spectraux est introduite sur une trajectoire de rayons de microscope et
- dans lequel un échantillon à examiner est balayé par lignes dans au moins deux directions de coordonnées avec un dispositif de balayage, et la lumière de l'échantillon fait l'objet d'une détection spectrale, au moins une image de l'échantillon étant produite à partir de la lumière réfléchie et/ou émise par les lieux exposés,
**caractérisé**
- **en ce que** la lumière laser est modifiée en termes de composition spectrale pendant l'enregistrement de l'image, et des lieux de l'échantillon situés les uns à côté des autres sur une ligne de balayage sont exposés à une lumière laser de composition spectrale variable,
- **en ce que**, du fait de l'exposition de l'échantillon à la lumière laser, une composition spectrale caractéristique de la lumière laser est associée à chaque lieu de l'échantillon, de telle sorte que
- lors du balayage de certains lieux de l'échantillon (37), on procède à une modification appropriée de la composition spectrale de la lumière laser,
- **en ce que** la lumière laser est modifiée en termes d'intensité pendant l'enregistrement de l'image et des lieux de l'échantillon situés les uns à côté des autres sur une ligne de balayage sont exposés à une lumière laser d'intensité variable, et
- **en ce que**, du fait de l'exposition de l'échantillon à la lumière laser, une intensité spécifique au lieu est associée à chaque lieu de l'échantillon,
- des lieux (37) de l'échantillon, qui se trouvent à l'intérieur d'un détail (35) à analyser étant exposés avec une composition spectrale différente de la lumière laser par rapport à des lieux (36) qui se trouvent en dehors du détail (35) à analyser de l'échantillon.

2. Procédé selon la revendication 1,
**caractérisé en ce que**
la composition spectrale et/ou l'intensité de la lumière laser pendant la déviation est modifiée par couplage supplémentaire temporaire d'une ou plusieurs composantes spectrales ou par interruption temporaire de couplage d'une ou plusieurs composantes spectrales.

3. Procédé selon l'une des revendications 1 ou 2,
**caractérisé en ce que**
le couplage de la lumière laser est interrompu temporairement pendant la déviation.

4. Procédé selon la revendication 2,
**caractérisé en ce que**
les lieux situés les uns à côté des autres sur une ligne sont exposés plusieurs fois à la lumière laser couplée et ainsi toujours les mêmes lieux sont exposés à une lumière laser de composition spectrale variable et/ou d'intensité variable.

5. Procédé selon l'une quelconque des revendications précédentes,
**caractérisé en ce que**
les composantes spectrales ayant des longueurs d'onde de λ_{A1}=633nm, λ_{A2}=568nm, λ_{A3}=543nm, λ_{A4}=514nm, λ_{A5}=488nm et/ou λ_{A6}=458nm dans le domaine VIS ainsi que des longueurs d'onde de λ_{A7}=351nm et/ou λ_{A8}=364nm dans le domaine UV sont couplées temporairement en plus, ou leur couplage est interrompu.

6. Procédé selon l'une quelconque des revendications précédentes,
**caractérisé en ce que**
la lumière réfléchie et/ou émise par chaque lieu exposé de l'échantillon est analysée en termes de propriétés spectrales et d'intensité, l'analyse s'effectuant de manière synchrone dans le temps avec l'exposition de la même zone en tenant compte de la composition spectrale et/ou de l'intensité de la lumière laser à laquelle ce lieu est exposé.

7. Procédé selon la revendication 6,
**caractérisé en ce que**
la lumière laser réfléchie et/ou émise par chaque lieu exposé est détectée avec plusieurs canaux de détection, les différents canaux de détection étant conçus pour recevoir différentes composantes spectrales.

8. Procédé selon l'une quelconque des revendications précédentes,
**caractérisé en ce que**
la composition spectrale et/ou l'intensité de la lumière laser couplée sur la trajectoire des rayons du microscope correspond au rayonnement d'excitation d'un colorant fluorescent contenu dans l'échantillon ou appliqué sur l'échantillon et les différents canaux de détection sont conçus pour recevoir le rayonnement d'émission partant du colorant fluorescent.

9. Procédé selon l'une quelconque des revendications précédentes,
**caractérisé en ce qu'**
une mise en relation mathématique entre les données qui caractérisent la composition spectrale et/ou l'intensité de la lumière laser dirigée sur un lieu, les données des résultats de l'analyse de la lumière réfléchie et/ou émise par cette même lieu et des positions de déviation correspondant à cette zone est effectuée afin de déterminer les surfaces et/ou volumes délimités par des lieux choisis et/ou pour déterminer des signaux de réglage pour la modification de la composition spectrale et/ou de l'intensité de la lumière laser à envoyer sur ce lieu.

10. Procédé selon l'une quelconque des revendications précédentes,
**caractérisé en ce qu'**
une analyse de la composition spectrale et/ou de l'intensité de la lumière laser couplée est effectuée et une mise en relation mathématique des résultats de l'analyse du rayonnement laser envoyé sur un lieu donné avec les résultats d'analyse de la lumière réfléchie et/ou émise par ce lieu est effectuée.

11. Procédé selon la revendication 10,
**caractérisé en ce que**,
pour déterminer une position d'une couche limite optique, on détermine et on enregistre des positions de déviation de la trajectoire des rayons du microscope pour des lieux situés les uns à côté des autres, pour lesquels les différences de propriétés spectrales de la lumière réfléchie et/ou émise par ces lieux dépassent une valeur de seuil prédéterminée.

12. Procédé selon la revendication 11,
**caractérisé en ce qu'**
avec les positions de déviation enregistrées, des signaux de réglage pour la composition spectrale et/ou l'intensité de la lumière laser sont déterminés et imposés pour l'exposition de ces lieux lors d'un cycle de détection ultérieur.

13. Microscope à balayage laser pour la mise en oeuvre du procédé selon l'une quelconque des revendications précédentes, avec
- un module laser pour produire de la lumière laser avec différentes composantes spectrales au choix,
- avec des fibres monomode pour coupler la lumière laser dans la trajectoire des rayons du microscope,
- avec un dispositif de balayage déviant au moins dans deux dimensions,
- avec un objectif de microscope qui focalise la lumière laser sur un échantillon,
- avec plusieurs détecteurs pour recevoir différentes composantes spectrales de la lumière réfléchie et/ou émise par l'échantillon, et
- avec un circuit d'analyse qui est placé après les sorties des détecteurs,
**caractérisé**
- **en ce que** dans le module laser, plusieurs lasers à longueur d'onde unique et/ou multiple commandables séparément et un AOTF (filtre accordable acousto-optique) sont prévus, le dispositif de balayage et l'AOTF pouvant être commandés de manière synchrone,
- **en ce qu'**il est prévu comme détecteurs des photomultiplicateurs (PMT) et, pour la ramification du rayonnement réfléchi et/ou émis venant de l'échantillon vers différents canaux de détection, des diviseurs chromatiques interchangeables les uns les autres et placés sur des dispositifs d'échange commandables,
- **en ce que** les entrées de commande du module laser, du dispositif de balayage et des dispositifs d'échange sont reliées aux sorties du circuit d'analyse,
- **en ce qu'**une composante spectrale de la lumière laser introduite sur la trajectoire des rayons du microscope est envoyée sur un récepteur optoélectronique, dont la sortie est reliée au circuit d'analyse, et
- **en ce que**, dans le circuit d'analyse, une mise en relation mathématique des signaux de sortie du récepteur optoélectronique avec les signaux de sortie des PMT et avec les signaux de déviation du dispositif de balayage est prévue.
